# EUROPEAN PATENT APPLICATION

(11) **EP 4 772 659 A1**
(43) Date of publication of application: **08.07.2026**
(21) Application number: 25781376.6
(22) Date of filing: 03.03.2025
(51) Int. Cl.: C22B 26/12, C22B 7/00, C22B 47/00, C22B 23/00, H01M 10/54

(54) **METHOD FOR EFFICIENTLY SEPARATING LITHIUM FROM MULTI-ELEMENT LITHIUM BATTERY ELECTRODE WASTE IN ONE STEP**

(30) Priority: 01.04.2024 CN 202410384473
(71) Applicant: Yantai Ze Chuang New Energy Technology Co., Ltd., Yantai, Shandong 264000 (CN)
(72) Inventor: TANG, Li, Xiangtan, Hunan 411399 (CN)
(74) Representative: Bayramoglu et al.
(86) International application number: PCT/CN2025/080121
(87) International publication number: WO 2025/209079

(57) **Abstract**

The present disclosure discloses a method for one-step efficient separation of lithium from an electrode scrap of a multi-element lithium battery. The electrode scrap of the multi-element lithium battery is at least one of a cathode scrap and an anode scrap. The multi-element lithium battery includes at least one of nickel, cobalt, and manganese. The method includes the following steps: S1. one-step lithium separation: adding an inorganic acid, a leaching aid, and a reducing agent to a powder of the electrode scrap of the multi-element lithium battery, and stirring at a specific temperature and allowing a leaching reaction for a specific period of time to produce a leached slurry; and S2. filtration and washing: filtering and washing the leached slurry to produce a lithium-rich solution with a lithium ion concentration of 10 g/L to 30 g/L and a residue. The present disclosure enables the one-step efficient separation of lithium from elements such as nickel, cobalt, and manganese, breaks down the production barrier between spent lithium battery recycling and nickel-cobalt-manganese smelting, and achieves the high recovery rate of lithium while reducing the comprehensive unit cost of nickel, cobalt, and manganese recovery. Therefore, the present disclosure has significance for global promotion.

## Description

### TECHNICAL FIELD

The present disclosure relates to the technical field of recycling battery waste, and in particular, to a method for one-step efficient separation of lithium from an electrode scrap of a multi-element lithium battery.

### BACKGROUND TECHNOLOGY

With the development of the new energy vehicle industry, the market demand for lithium batteries has been expanding continuously. Lithium carbonate is a key raw material for power batteries. Consequently, the demand for lithium carbonate has also increased significantly in recent years. Based on various data in 2022 alone, the consumption of lithium carbonate in China was 505,000 tons, and the application of lithium carbonate in lithium battery products was mostly concentrated in cathode materials. In the downstream consumption of lithium carbonate, lithium batteries accounted for 469,700 tons, with 409,000 tons used for cathode materials. However, only 287,000 tons of lithium carbonate were produced from ores. With the vigorous development of the electric vehicle industry, there will be increasingly prominent contradiction between supply and demand for lithium metal raw materials required by power battery production. Power batteries include high levels of valuable metals such as lithium, cobalt, and nickel and a large number of toxic/harmful compounds. As a result, if not safely disposed of and utilized, a large number of retired power batteries will cause resource waste and heavy environmental pollution.

Currently, the positive (negative) electrode scrap of lithium batteries that include one or more of nickel, cobalt, and manganese is typically recycled by the full dissolution-leaching process. Specifically, leaching is conducted using an inorganic acid such as sulfuric acid in combination with hydrogen peroxide or sodium metabisulfite as a reducing agent, such that metals such as lithium, nickel, cobalt, manganese, copper, and aluminum fully enter a solution. A resulting leachate is purified, and then nickel, cobalt, and manganese are separated by extraction to produce sulfate products. A resulting raffinate is subjected to lithium recovery. The full dissolution-leaching process presents disadvantages such as long process flow, high cost, complex extraction and separation of nickel, cobalt, and manganese, and low lithium content in the raffinate, resulting in low lithium recovery rate.

In contrast, the one-step efficient lithium separation/selective lithium extraction process achieves the preferential separation of lithium from nickel, cobalt, and manganese through technical means, resulting in rapid lithium recovery and a simple process. Depending on the technical means employed, the lithium separation processes can be divided into reduction roasting, acid roasting, and full hydrometallurgy.

The reduction roasting achieves the separation of lithium from nickel, cobalt, and manganese by destroying the original structure. For example, Chinese patent CN112374511B discloses the following method: with graphite and a binder in a black mass of a spent ternary battery as reducing agents, a structure of a ternary material is destroyed through roasting, self-reduction, and phase transformation, and carbonated water is introduced as a leaching agent to convert lithium carbonate into lithium bicarbonate readily leachable in water, thereby enabling one-step efficient separation of lithium. Chinese patent CN10872648 discloses the following method: with hydrogen as a reducing agent, fluidized reduction roasting is conducted to achieve structural transformation, and then a reduced powder is subjected to water leaching to produce a lithium hydroxide solution, thus separating lithium from nickel, cobalt, and manganese.

The acid roasting achieves one-step efficient separation of lithium by destroying the original structure. For example, Chinese patent CN116516174A provides the following method: roasting is conducted in the presence of a mixture of a water-soluble iron salt and an inorganic acid, and a roasting product is subjected to water leaching such that lithium enters a solution to produce a lithium-rich solution, thereby achieving the separation of lithium from nickel, cobalt, and manganese.

The full hydrometallurgy is a selective lithium extraction process. For example, Chinese patent CN109022793A provides the following method: low-valent ions of nickel, cobalt, and manganese in a ternary cathode material are oxidized with an oxidizing agent into high-valent compounds to destroy a crystal structure, such that lithium enters a solution in an ionic form and nickel, cobalt, and manganese exist in a residue form, thus achieving the one-step efficient separation of lithium.

In the one-step efficient lithium separation/selective lithium extraction process or the reduction/acid roasting treatment-hydrometallurgy process or the full hydrometallurgy process, process conditions are controlled to make lithium preferentially leached into a solution and nickel, cobalt, and manganese mostly remain in a residue, thereby allowing the separation of lithium from most of nickel, cobalt, and manganese. This leads to efficient lithium recovery and a simple process. However, the roasting treatment-hydrometallurgy process still faces challenges such as high investment in heat treatment equipment, high operating costs, significant pressure on safety and environmental protection, and low efficiency in one-step high-performance lithium extraction. The full hydrometallurgy process suffers from issues such as low lithium concentration in a leachate, incomplete separation of nickel, cobalt, and manganese, and need for further improvement in lithium leaching rate, lithium recovery rate, and lithium/nickel-cobalt-manganese separation efficiency.

The one-step efficient lithium separation/selective lithium extraction process demonstrates considerable drawbacks in terms of production line investment, production cost, safety and environmental protection, production efficiency, etc., and thus is not extensively used in industrial production.

In China, the hydrometallurgical production lines for MHP (a mixed nickel-cobalt hydroxide intermediate produced from ore) have a high production capacity and a low comprehensive unit cost for nickel, cobalt, and manganese recovery. In contrast, the hydrometallurgical production lines for recycling lithium batteries that include one or more of nickel, cobalt, and manganese generally have a low production capacity, a high comprehensive cost for nickel and cobalt recovery, and a low comprehensive lithium recovery rate of less than 80%, resulting in poor cost-effectiveness. After the present disclosure is applied, lithium is preferentially separated, and a (carbon) residue including one or more of nickel, cobalt, and manganese can be directly integrated into the existing MHP hydrometallurgical production line for nickel, cobalt, and manganese recovery. This will reduce the production cost of nickel, cobalt, and manganese and increase the recovery rate of lithium, thereby improving economic benefits.

With the rapid development of new energy vehicles powered by lithium batteries including one or more of nickel, cobalt, and manganese, especially ternary lithium batteries, Europe and the United States have classified spent lithium batteries as high-value waste and have enacted relevant legislation, aiming to establish an industrial chain for lithium battery recycling. Currently, European battery recycling enterprises, for example, Umicore of Belgium, recycle lithium batteries by pyrometallurgical smelting. However, this technology involves a high production line construction cost, a high operating cost, and a lithium recovery rate of less than 50%. Consequently, this technology is unsuitable for new lithium battery recycling projects. Some projects have directly introduced and copied the production process in China, including full dissolution of nickel, cobalt, manganese, and lithium, extraction and recovery of nickel, cobalt, and manganese, and recovery of lithium. Since relevant expertise has long withdrawn from industry-academia-research collaboration, there is a lack of engineers and frontline technicians specialized in the extraction process essential for hydrometallurgical separation and purification of nickel, cobalt, and manganese. As a result, continuous production is difficult to achieve, and similar projects have largely been unsuccessful.

In summary, nickel-cobalt-manganese smelting projects primarily focus on recovering nickel and cobalt, with relatively low comprehensive recovery costs for nickel and cobalt. When battery waste including lithium, nickel, and cobalt is introduced into such a system as raw material, lithium is recovered only as a byproduct, resulting in very low recovery efficiency. Dedicated lithium battery recycling projects are designed for the comprehensive recovery of lithium, nickel, cobalt, and manganese. Although existing production processes involve lithium recovery, these production processes are still plagued by issues such as low lithium recovery rates and high comprehensive recovery costs for nickel and cobalt.

### CONTENT OF THE INVENTION

In view of this, for various types of lithium battery cathode (anode) scraps available on the market that include one or more of nickel, cobalt, and manganese, it is necessary to develop a novel method for one-step efficient separation of lithium characterized by short process flow, small equipment investment, low production cost, and the ability to achieve thorough and effective separation of lithium from nickel, cobalt, manganese (carbon). Accordingly, the present disclosure provides a method for one-step efficient separation of lithium from an electrode scrap of a multi-element lithium battery.

The present disclosure adopts the following solution:
A method for one-step efficient separation of lithium from an electrode scrap of a multi-element lithium battery is provided, including the following steps:
the electrode scrap of the multi-element lithium battery is at least one of a cathode scrap and an anode scrap, and the multi-element lithium battery includes at least one of nickel, cobalt, and manganese,
S1, one-step lithium separation
adding an inorganic acid, a leaching aid, and a reducing agent to a powder of the electrode scrap of the multi-element lithium battery, and stirring at a specific temperature and allowing a leaching reaction for a specific period of time to produce a leached slurry; and
S2, filtration and washing
filtering and washing the leached slurry to produce a lithium-rich solution with a lithium ion concentration of 10 g/L to 30 g/L and a residue.

As a preferred technical solution, the electrode scrap in the S1 is one or a mixture of two or more of a battery, an electrode scrap produced from crushing and sorting an electrode, and a cathode material production scrap;
the battery is one or more of a lithium nickel manganese cobalt oxide battery, a lithium cobalt oxide battery, a lithium nickel oxide battery, a lithium manganese oxide battery, and a lithium nickel cobalt aluminum oxide battery;
the electrode scrap produced from crushing and sorting the electrode is one or more of an electrode scrap produced from crushing and sorting a lithium nickel manganese cobalt oxide electrode, an electrode scrap produced from crushing and sorting a lithium cobalt oxide electrode, an electrode scrap produced from crushing and sorting a lithium nickel oxide electrode, an electrode scrap produced from crushing and sorting a lithium manganese oxide electrode, and an electrode scrap produced from crushing and sorting a lithium nickel cobalt aluminum oxide electrode; and the electrode scrap produced from crushing and sorting the electrode includes a cathode scrap produced from crushing and sorting the electrode and an anode scrap produced from crushing and sorting the electrode; and
the cathode material production scrap is one or more of a lithium nickel manganese cobalt oxide cathode material production scrap, a lithium cobalt oxide cathode material production scrap, a lithium nickel oxide cathode material production scrap, a lithium manganese oxide cathode material production scrap, and a lithium nickel cobalt aluminum oxide cathode material production scrap.

As a preferred technical solution, in the S2, the inorganic acid and the leaching aid are added first, and then the reducing agent is added. An order of adding the inorganic acid and the leaching aid is not particularly limited, but the inorganic acid and the leaching aid must not be pre-mixed before addition.

As a preferred technical solution, the inorganic acid in the S2 is one or a mixture of two or more of sulfuric acid, hydrochloric acid, and nitric acid;
the reducing agent in the S2 is one or more of sodium metabisulfite, sodium dithionate, hydrogen peroxide, glucose, soluble starch, ferrous sulfate, sodium sulfite, and sodium thiosulfate; and
the leaching aid in the S2 is one or more of citric acid, malonic acid, acetylacetone, oxalic acid, ascorbic acid, tartaric acid, salicylic acid, and ethylenediaminetetraacetic acid (EDTA).

As a preferred technical solution, in the S2, a mass ratio of the electrode scrap of the multi-element lithium battery to the inorganic acid is 1:(0.05-0.6).

As a preferred technical solution, in the S2, a mass ratio of the electrode scrap of the multi-element lithium battery to the reducing agent is 1:(0.1-1.0).

As a preferred technical solution, in the S2, a mass ratio of the electrode scrap of the multi-element lithium battery to the leaching aid is 1:(0.5-3.0).

As a preferred technical solution, in the S2, the leaching reaction is conducted with a liquid-to-solid ratio of (2-6):1.

As a preferred technical solution, in the S2, the leaching reaction is conducted for 1 h to 8 h at 40°C to 100°C, and a pH at an endpoint of the leaching reaction is 1.5 to 4.0.

In the above technical solution, a method for one-step efficient separation of lithium from an electrode scrap of a multi-element lithium battery is provided. The electrode scrap of the multi-element lithium battery is at least one of a cathode scrap and an anode scrap. The multi-element lithium battery includes at least one of nickel, cobalt, and manganese. The method includes the following steps: S1. one-step lithium separation: adding an inorganic acid, a leaching aid, and a reducing agent to a powder of the electrode scrap of the multi-element lithium battery, and stirring at a specific temperature and allowing a leaching reaction for a specific period of time to produce a leached slurry; and S2. filtration and washing: filtering and washing the leached slurry to produce a lithium-rich solution with a lithium ion concentration of 10 g/L to 30 g/L and a residue. The residue produced after lithium extraction is a nickel-cobalt-manganese (carbon) residue, which can be used as a raw material for producing nickel, cobalt, and manganese salts. As a straightforward approach, the residue is fed as a raw material into an existing production line for hydrometallurgical extraction of nickel, cobalt, and manganese.

Working principle:
In the method of the present disclosure, under acidic conditions, the phase and structure of the electrode material are dissociated through the combined action of the reducing agent and the leaching aid, and dissociated lithium ions react with the inorganic acid to produce a water-soluble lithium salt solution. Moreover, part of nickel, cobalt, and manganese ions in the electrode material are transformed from high-valence states to low-valence states to produce insoluble low-valence compounds of nickel, cobalt, and manganese that remain in the residue, thereby achieving the preferential leaching of lithium and the complete separation of lithium from nickel, cobalt, and manganese.

Compared with the prior art, the technical solution of the present disclosure has the following technical advantages or positive effects:
1. The method of the present disclosure shows strong raw material adaptability. One or a mixture of two or more of the following can be used as a raw material in the technical solution of the present disclosure: cathode (anode) scrap produced from crushing and sorting batteries or electrodes of lithium nickel manganese cobalt oxide, lithium cobalt oxide, lithium nickel oxide, lithium nickel manganese oxide, and lithium nickel cobalt aluminum oxide, and cathode material production scrap.
2. The method of the present disclosure achieves the purpose of one-step efficient separation of lithium and effective separation of nickel, cobalt, and manganese, with a lithium leaching rate of 95% or more and nickel, cobalt, and manganese leaching rates of less than 3%. The resulting leachate is of high quality, and has a lithium concentration as high as 10 g/L to 30 g/L and very low concentrations of other metal impurity ions. The lithium recovery rate for the lithium carbonate product reaches 90% or more, enabling large-scale industrial application. The present disclosure provides a new approach for the efficient and economical recycling of lithium battery cathode (anode) scrap including one or more of nickel, cobalt, and manganese.
3. The method of the present disclosure is a novel full hydrometallurgical process characterized by low production line investment, low production cost, significant advantages in safety and environmental protection, and high production efficiency. The lithium recovery process is self-contained, and thus can be easily placed upstream of existing lithium/nickel-cobalt-manganese production systems. This allows various types of lithium battery cathode (anode) scrap including one or more of nickel, cobalt, and manganese available on the market to be treated as new feedstocks in a coordinated manner.
4. After the present disclosure is applied, the lithium-rich solution can be used to produce a lithium product on-site (such as battery-grade lithium carbonate, battery-grade lithium chloride, and battery-grade lithium hydroxide), and the (carbon) residue including one or more of nickel, cobalt, and manganese can be sent to nickel-cobalt smelting enterprises for pyrometallurgical or hydrometallurgical recovery of nickel, cobalt, and manganese.
5. The present disclosure enables the one-step efficient separation of lithium from nickel, cobalt, and manganese, breaks down the production barrier between spent lithium battery recycling and nickel-cobalt-manganese smelting, and achieves the high recovery rate of lithium while reducing the comprehensive unit cost of nickel, cobalt, and manganese recovery. Therefore, the present disclosure has significance for global promotion.
6. The method of the present disclosure is eco-friendly, is simple and convenient to implement, and involves a short process flow and a self-contained lithium recovery system. The method of the present disclosure enables the efficient and selective preferential separation of lithium from nickel, cobalt, and manganese in battery scrap through a single leaching step, such that lithium and nickel, cobalt, and manganese enter their respective production systems to produce the corresponding products, thereby avoiding mutual interference.

### DESCRIPTION OF THE DRAWINGS

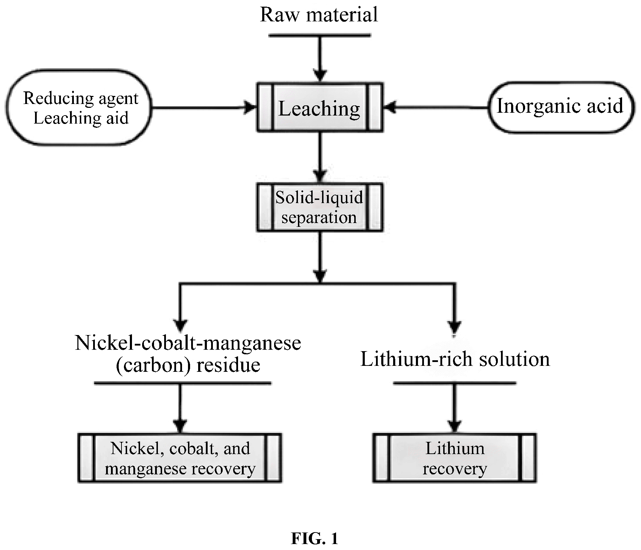

FIG. 1 is a flow chart of the method according to the present disclosure.

### SPECIFIC IMPLEMENTATIONS

The present disclosure provides a method for one-step efficient separation of lithium from an electrode scrap of a multi-element lithium battery. In order to make the technical means, creative features, objectives, and effects of the present disclosure easily understood, the present disclosure is further described below with reference to specific examples.

### Example 1

A spent lithium nickel manganese cobalt oxide battery was crushed and sorted to produce a cathode and anode mixed scrap powder (including the following major components: 4.32% of Li, 20.0% of Ni, 8.5% of Co, 9.7% of Mn, 1.5% of Cu, 0.5% of Al, and 32.5% of C). Dilute sulfuric acid was added with a liquid-to-solid ratio of 2:1 to the cathode and anode mixed scrap powder, and slurrying was conducted. A mass ratio of sulfuric acid to the cathode and anode mixed scrap powder was 37.55%. At 80°C, tartaric acid and ascorbic acid, as leaching aids, were continuously added. A mass ratio of the tartaric acid to the ascorbic acid was 6:4. A total amount of the leaching aids was 2.0 times a mass of the cathode and anode mixed scrap powder. Then, sodium metabisulfite, as a reducing agent, was added. An amount of the reducing agent was 0.1 time the mass of the cathode and anode mixed scrap powder. Stirring was conducted to allow a reaction for 8 h. A pH at an endpoint of the reaction was controlled at 3.0. Solid-liquid separation was conducted to produce a lithium-rich solution and a nickel-cobalt-manganese residue.

Ion concentrations in the lithium-rich solution were determined to be as follows: Li: 21.0 g/L, Ni: 0.05 g/L, Co: 0.01 g/L, Mn: 0.4 g/L, Cu: 0.3 g/L, and Al: 0.05 g/L. Based on the ion concentrations in the lithium-rich solution, a leaching rate of lithium was calculated to be 97.22%, a leaching rate of Ni was calculated to be 0.05%, a leaching rate of Co was calculated to be 0.02%, and a leaching rate of Mn was calculated to be 0.08%.

The lithium-rich solution, namely, a lithium sulfate leachate, was heated to 90°C, and a sodium hydroxide solid was added to adjust a pH of the lithium-rich solution to 11 or higher. A reaction was conducted for 4 h, during which lithium remained in an ionic state and impurities such as nickel, cobalt, manganese, copper, and aluminum entered an impurity-removal residue in a solid form. Solid-liquid separation was conducted to produce a purified solution. A 300 g/L sodium carbonate solution prepared was heated to 90°C and slowly added to the purified solution at 90°C. A reaction was conducted for 2 h. Centrifugation was conducted to produce industrial-grade lithium carbonate.

The nickel-cobalt-manganese residue was mixed with water at a liquid-to-solid ratio of 3:1, and slurrying was conducted. Concentrated sulfuric acid was then added. A resulting solution was heated to 90°C, and a reaction was conducted for 4 h. As a result, nickel, cobalt, and manganese were converted into a nickel-cobalt-manganese sulfate mixed solution, and thus separated from anode carbon. The nickel-cobalt-manganese sulfate mixed solution could be used as required to produce various nickel, cobalt, and manganese salt products.

### Example 2

A lithium nickel manganese cobalt oxide production scrap powder (including the following major components: 6.54% of Li, 29.63% of Ni, 12.5% of Co, and 11.7% of Mn) was mixed with a hydrochloric acid solution at a liquid-to-solid ratio of 3:1, and slurrying was conducted. A mass ratio of hydrochloric acid to the lithium nickel manganese cobalt oxide production scrap powder was 30.0%. At 80°C, citric acid, as a leaching aid, was added, and a reaction was conducted for 2 h. An amount of the leaching aid was 2.3 times a mass of the lithium nickel manganese cobalt oxide production scrap powder. Then, hydrogen peroxide, as a reducing agent, was added. An amount of the reducing agent was 0.25 time the mass of the lithium nickel manganese cobalt oxide production scrap powder. Stirring was conducted to allow a reaction for 6 h. A pH at an endpoint of the reaction was controlled at 1.5 to 2.0. Solid-liquid separation was conducted to produce a lithium-rich solution and a nickel-cobalt-manganese residue.

Ion concentrations in the lithium-rich solution were determined to be as follows: Li: 21.36 g/L, Ni: 0.08 g/L, Co: 0.05 g/L, and Mn: 0.8 g/L. Based on the ion concentrations in the lithium-rich solution, a leaching rate of lithium was calculated to be 98.00%, a leaching rate of Ni was calculated to be 0.08%, a leaching rate of Co was calculated to be 0.12%, and a leaching rate of Mn was calculated to be 2.05%.

The lithium-rich solution was purified to remove small amounts of residual impurity ions such as nickel, cobalt, and manganese, thereby facilitating the subsequent production of lithium carbonate products.

### Example 3

A lithium nickel manganese cobalt oxide electrode scrap powder (including the following major components: 6.35% of Li, 25.63% of Ni, 12.5% of Co, 11.7% of Mn, and 1.5% of Al) was mixed with a sulfuric acid solution at a liquid-to-solid ratio of 4:1, and slurrying was conducted. A mass ratio of sulfuric acid to the lithium nickel manganese cobalt oxide electrode scrap powder was 60.0%. At 90°C, EDTA, as a leaching aid, was continuously added. A mass of the leaching aid was 0.6 time a mass of the lithium nickel manganese cobalt oxide electrode scrap powder. Then, sodium dithionate, as a reducing agent, was added. An amount of the reducing agent was 0.15 time the mass of the lithium nickel manganese cobalt oxide electrode scrap powder. Stirring was conducted to allow a reaction for 6 h. A pH at an endpoint of the reaction was controlled at 4.0. Solid-liquid separation was conducted to produce a lithium-rich solution and a nickel-cobalt-manganese residue.

Ion concentrations in the lithium-rich solution were determined to be as follows: Li: 15.55 g/L, Ni: 0.05 g/L, Co: 0.05 g/L, Mn: 0.5 g/L, and Al: 0.05 g/L. Based on the ion concentrations in the lithium-rich solution, a leaching rate of lithium was calculated to be 98.00%, a leaching rate of Ni was calculated to be 0.06%, a leaching rate of Co was calculated to be 0.12%, a leaching rate of Mn was calculated to be 1.28%, and a leaching rate of Al was calculated to be 1.0%.

The lithium-rich solution was purified to remove small amounts of residual impurity ions such as nickel, cobalt, and manganese, thereby facilitating the subsequent production of lithium carbonate products.

### Example 4

A lithium nickel cobalt aluminum oxide scrap powder (including the following major components: 6.3% of Li, 10.22% of Ni, 43.05% of Co, and 1.23% of Al) was mixed with EDTA as a leaching aid, and stirring was fully conducted. An amount of the leaching aid was 1.6 times a mass of the lithium nickel cobalt aluminum oxide scrap powder. A nitric acid solution was added with a liquid-to-solid ratio of 6:1, and slurrying was conducted. A mass ratio of nitric acid to the lithium nickel cobalt aluminum oxide scrap powder was 20.0%. At 75°C, glucose, as a reducing agent, was added. An amount of the reducing agent was 0.35 time the mass of the lithium nickel cobalt aluminum oxide scrap powder. Stirring was conducted to allow a reaction for 8 h. A pH at an endpoint of the reaction was controlled at 4.0. Solid-liquid separation was conducted to produce a lithium-rich solution and a nickel-cobalt-manganese residue.

Ion concentrations in the lithium-rich solution were determined to be as follows: Li: 10.34 g/L, Ni: 0.05 g/L, Co: 0.05 g/L, Mn: 0.6 g/L, and Al: 0.08 g/L. Based on the ion concentrations in the lithium-rich solution, a leaching rate of lithium was calculated to be 98.00%, a leaching rate of Ni was calculated to be 0.08%, a leaching rate of Co was calculated to be 0.02%, a leaching rate of Mn was calculated to be 1.18%, and a leaching rate of Al was calculated to be 1.1%.

The lithium-rich solution was purified to remove small amounts of residual impurity ions such as nickel, cobalt, and manganese, thereby facilitating the subsequent production of lithium carbonate products.

### Example 5

A lithium nickel oxide scrap powder (including the following major components: 6.8% of Li and 57.8% of Ni) was mixed with an aqueous hydrochloric acid solution at a liquid-to-solid ratio of 4.5:1, and slurrying was conducted. An amount of hydrochloric acid was 50% of an amount of the lithium nickel oxide scrap powder. At 90°C, salicylic acid, as a leaching aid, was added, and stirring was conducted to allow leaching for 2.5 h. An amount of the leaching aid was 1.85 times a mass of the lithium nickel oxide scrap powder. Then, soluble starch, as a reducing agent, was added. An amount of the reducing agent was 0.4 time the mass of the lithium nickel oxide scrap powder. Stirring was conducted to allow a reaction for 1.5 h. A pH at an endpoint of the reaction was controlled at 4.0. Solid-liquid separation was conducted to produce a lithium-rich solution and a nickel-cobalt-manganese residue.

Ion concentrations in the lithium-rich solution were determined to be as follows: Li: 14.84 g/L, and Ni: 0.5 g/L. Based on the ion concentrations in the lithium-rich solution, a leaching rate of Li was calculated to be 98.00% and a leaching rate of Ni was calculated to be merely 0.31%.

The lithium-rich solution was purified to remove small amounts of residual impurity ions such as nickel, thereby facilitating the subsequent production of lithium carbonate products.

### Example 6

A lithium manganese oxide scrap powder (including the following major components: 3.85% of Li and 44.36% of Mn) was mixed with a sulfuric acid/hydrochloric acid mixed solution at a liquid-to-solid ratio of 3.5:1, and slurrying was conducted. Amounts of sulfuric acid and hydrochloric acid were 10% and 15% of an amount of the lithium manganese oxide scrap powder. At 60°C, acetylacetone, as a leaching aid, was continuously added, and stirring was conducted for 6 h. An amount of the leaching aid was 0.85 time a mass of the lithium manganese oxide scrap powder. Then, ferrous sulfate and sodium metabisulfite, as reducing agents, were added. A total amount of the reducing agents was 0.8 time the mass of the lithium manganese oxide scrap powder. A leaching reaction was conducted for 2 h. A pH at an endpoint of the leaching reaction was controlled at about 1.5. Solid-liquid separation was conducted to produce a lithium-rich solution and a nickel-cobalt-manganese residue.

Ion concentrations in the lithium-rich solution were determined to be as follows: Li: 10.78 g/L, and Mn: 1.5 g/L. Based on the ion concentrations in the lithium-rich solution, a leaching rate of Li was calculated to be 98.02% and a leaching rate of Mn was calculated to be merely 1.18%.

The lithium-rich solution was purified to remove small amounts of residual impurity ions such as manganese, thereby facilitating the subsequent production of lithium carbonate products.

### Example 7

A lithium cobalt oxide scrap powder (including the following major components: 7.02% of Li and 61.4% of Co) was thoroughly mixed with oxalic acid as a leaching aid. An amount of the leaching aid was 2.5 times a mass of the lithium cobalt oxide scrap powder. A nitric acid solution was added with a liquid-to-solid ratio of 5:1, and slurrying was conducted. A mass of nitric acid was 0.4% of the mass of the lithium cobalt oxide scrap powder. Stirring was conducted at 80°C for 2 h. Sodium sulfite, as a reducing agent, was then continuously added. An amount of the reducing agent was 0.5 time the mass of the lithium cobalt oxide scrap powder. Stirring was conducted to allow a reaction for 3 h. A pH at an endpoint of the reaction was controlled at 2.5. Solid-liquid separation was conducted to produce a lithium-rich solution and a nickel-cobalt-manganese residue.

Ion concentrations in the lithium-rich solution were determined to be as follows: Li: 13.85 g/L, and Co: 1.5 g/L. Based on the ion concentrations in the lithium-rich solution, a leaching rate of Li was calculated to be 98.28% and a leaching rate of Co was calculated to be 1.22%.

The lithium-rich solution was purified to remove small amounts of residual impurity ions such as cobalt, thereby facilitating the subsequent production of lithium carbonate products.

### Example 8

A lithium nickel cobalt oxide scrap powder (including the following major components: 6.25% of Li, 11.22% of Ni, and 44.05% of Co) was mixed with a nitric acid solution at a liquid-to-solid ratio of 2.5:1, and slurrying was conducted. An amount of nitric acid was 30% of an amount of the lithium nickel cobalt oxide scrap powder. At 90°C, salicylic acid and oxalic acid, as leaching aids, and soluble starch, as a reducing agent, were continuously added. An amount of the salicylic acid and the oxalic acid (1:1) was 1.75 times a mass of the lithium nickel cobalt oxide scrap powder. An amount of the reducing agent was 0.55 time the mass of the lithium nickel cobalt oxide scrap powder. Stirring was conducted to allow leaching for 6 h. A pH at an endpoint of the leaching was controlled at 3.0. Solid-liquid separation was conducted to produce a lithium-rich solution and a nickel-cobalt-manganese residue.

Ion concentrations in the lithium-rich solution were determined to be as follows: Li: 24.6 g/L, Co: 1.5 g/L, and Ni: 0.05 g/L. Based on the ion concentrations in the lithium-rich solution, a leaching rate of Li was calculated to be 98.40%, a leaching rate of Co was calculated to be 0.85%, and a leaching rate of Ni was calculated to be 0.12%.

The lithium-rich solution was purified to remove small amounts of residual impurity ions such as nickel and cobalt, thereby facilitating the subsequent production of lithium carbonate products.

### Example 9

A lithium manganese oxide/lithium cobalt oxide mixed scrap powder (including the following major components: 5.68% of Li, 33.7% of Co, and 20.18% of Mn) was mixed with water at a liquid-to-solid ratio of 3:1, and slurrying was conducted. Sulfuric acid, acetylacetone and salicylic acid as leaching aids, and ferrous sulfate as a reducing agent were added successively. An amount of the sulfuric acid was 0.15% of a mass of the lithium manganese oxide/lithium cobalt oxide mixed scrap powder. A total amount of the salicylic acid and the acetylacetone (1:1) was 0.85 time the mass of the lithium manganese oxide/lithium cobalt oxide mixed scrap powder. An amount of the ferrous sulfate was 0.35 time the mass of the lithium manganese oxide/lithium cobalt oxide mixed scrap powder. At 80°C, stirring was conducted to allow leaching for 5 h. Solid-liquid separation was conducted to produce a lithium-rich solution and a nickel-cobalt-manganese residue.

Ion concentrations in the lithium-rich solution were determined to be as follows: Li: 18.75 g/L, Co: 0.8 g/L, and Mn: 1.05 g/L. Based on the ion concentrations in the lithium-rich solution, a leaching rate of Li was calculated to be 99.00%, a leaching rate of Co was calculated to be 0.72%, and a leaching rate of Mn was calculated to be 1.56%.

The lithium-rich solution was purified to remove small amounts of residual impurity ions such as cobalt and manganese, thereby facilitating the subsequent production of lithium carbonate products.

### Example 10

A lithium manganese oxide/lithium nickel manganese cobalt oxide mixed scrap powder (including the following major components: 4.95% of Li, 20.26% of Ni, 4.59% of Co, and 20.07% of Mn) was mixed with a sulfuric acid solution at a liquid-to-solid ratio of 2:1, and slurrying was conducted. An amount of sulfuric acid was 0.3% of an amount of the lithium manganese oxide/lithium nickel manganese cobalt oxide mixed scrap powder. At 80°C, citric acid as a leaching aid and sodium dithionate as a reducing agent, were continuously added, and stirring was conducted to allow a reaction for 4 h. An amount of the citric acid was 1.8 times a mass of the lithium manganese oxide/lithium nickel manganese cobalt oxide mixed scrap powder. An amount of the reducing agent added was 0.1%. A pH at an endpoint of the reaction was controlled at 4.0. Solid-liquid separation was conducted to produce a lithium-rich solution and a nickel-cobalt-manganese residue.

Ion concentrations in the lithium-rich solution were determined to be as follows: Li: 24.35 g/L, Ni: 0.08 g/L, Co: 0.04 g/L, and Mn: 1.05 g/L. Based on the ion concentrations in the lithium-rich solution, a leaching rate of Li was calculated to be 98.37%, a leaching rate of Co was calculated to be 0.17%, a leaching rate of Ni was calculated to be 0.1%, and a leaching rate of Mn was calculated to be 1.05%.

The lithium-rich solution was purified to remove small amounts of residual impurity ions such as nickel, cobalt, and manganese, thereby facilitating the subsequent production of lithium carbonate products.

### Example 11

A lithium manganese oxide/lithium cobalt oxide/lithium nickel cobalt oxide mixed scrap powder (including the following major components: 5.96% of Li, 15.77% of Ni, 20.81% of Co, and 12.53% of Mn) was mixed with malonic acid as a leaching aid. An amount of the leaching aid was 2.8 times a mass of the lithium manganese oxide/lithium cobalt oxide/lithium nickel cobalt oxide mixed scrap powder. A sulfuric acid/nitric acid mixed solution was added at a liquid-to-solid ratio of 3.5:1, and slurrying was conducted. Amounts of sulfuric acid and nitric acid were 20% and 10% of the mass of the lithium manganese oxide/lithium cobalt oxide/lithium nickel cobalt oxide mixed scrap powder, respectively. At 80°C, a reaction was conducted for 3 h. Hydrogen peroxide as a reducing agent was slowly added, and a reaction was conducted for 3 h. An amount of the hydrogen peroxide was 0.15 time the mass of the lithium manganese oxide/lithium cobalt oxide/lithium nickel cobalt oxide mixed scrap powder. A pH at an endpoint of the reaction was controlled at 1.5. Solid-liquid separation was conducted to produce a lithium-rich solution and a nickel-cobalt-manganese residue.

Ion concentrations in the lithium-rich solution were determined to be as follows: Li: 16.78 g/L, Ni: 0.08 g/L, Co: 0.1 g/L, and Mn: 1.05 g/L. Based on the ion concentrations in the lithium-rich solution, a leaching rate of Li was calculated to be 98.54%, a leaching rate of Co was calculated to be 0.18%, a leaching rate of Ni was calculated to be 0.18%, and a leaching rate of Mn was calculated to be 2.93%.

The lithium-rich solution was purified to remove small amounts of residual impurity ions such as nickel, cobalt, and manganese, thereby facilitating the subsequent production of lithium carbonate products.

### Example 12

A mixed scrap powder of lithium cobalt oxide and lithium nickel manganese cobalt oxide black masses (including the following major components: 4.54% of Li, 10.85% of Ni, 31.6% of Co, and 4.71% of Mn) was mixed with ascorbic acid. An amount of the ascorbic acid was 1.5 times a mass of the mixed scrap powder of lithium cobalt oxide and lithium nickel manganese cobalt oxide black masses. Water was added at a liquid-to-solid ratio of 3:1, and slurrying was conducted. At 90°C, sulfuric acid was slowly added, and stirring was conducted to allow leaching for 1.5 h. An amount of the sulfuric acid was 0.60 time the mass of the mixed scrap powder of lithium cobalt oxide and lithium nickel manganese cobalt oxide black masses. Sodium thiosulfate as a reducing agent was added, and a reaction was conducted for 4.5 h. An amount of the reducing agent was 0.35 time the mass of the mixed scrap powder of lithium cobalt oxide and lithium nickel manganese cobalt oxide black masses. A pH at an endpoint of the reaction was controlled at 2.5. Solid-liquid separation was conducted to produce a lithium-rich solution and a nickel-cobalt-manganese residue.

Ion concentrations in the lithium-rich solution were determined to be as follows: Li: 15.01 g/L, Ni: 0.05 g/L, Co: 0.1 g/L, and Mn: 0.15 g/L. Based on the ion concentrations in the lithium-rich solution, a leaching rate of Li was calculated to be 99.18%, a leaching rate of Co was calculated to be 0.13%, a leaching rate of Ni was calculated to be 0.15%, and a leaching rate of Mn was calculated to be 0.96%.

The lithium-rich solution was purified to remove small amounts of residual impurity ions such as nickel, cobalt, and manganese, thereby facilitating the subsequent production of lithium carbonate products.

### Example 13

A mixed scrap powder of lithium manganese oxide, lithium cobalt oxide, lithium nickel oxide, lithium nickel cobalt oxide, lithium nickel cobalt aluminum oxide, and lithium nickel manganese cobalt oxide (including the following major components: 5.8% of Li, 10.85% of Ni, 25.63% of Co, 8.71% of Mn, and 0.5% of Al) was mixed with water at a liquid-to-solid ratio of 5:1, and slurrying was conducted. At 95°C, a hydrochloric acid solution with a mass concentration of 40% was slowly added, and EDTA as a leaching aid was also added. Stirring was conducted to allow leaching for 3.5 h. An amount of the EDTA was 2.2 times a mass of the mixed scrap powder of lithium manganese oxide, lithium cobalt oxide, lithium nickel oxide, lithium nickel cobalt oxide, lithium nickel cobalt aluminum oxide, and lithium nickel manganese cobalt oxide. Glucose as a reducing agent was then added, and a reaction was conducted for 3.5 h. An amount of the glucose was 0.3 time the mass of the mixed scrap powder of lithium manganese oxide, lithium cobalt oxide, lithium nickel oxide, lithium nickel cobalt oxide, lithium nickel cobalt aluminum oxide, and lithium nickel manganese cobalt oxide. A pH at an endpoint of the reaction was controlled at 3.5. Solid-liquid separation was conducted to produce a lithium-rich solution and a nickel-cobalt-manganese residue.

Ion concentrations in the lithium-rich solution were determined to be as follows: Li: 11.41 g/L, Ni: 0.05 g/L, Co: 0.1 g/L, Mn: 0.15 g/L, and Al: 0.03 g/L. A leaching rate of Li was calculated to be 98.36%, a leaching rate of Co was calculated to be 0.58%, a leaching rate of Ni was calculated to be 0.20%, a leaching rate of Mn was calculated to be 0.85%, and a leaching rate of Al was calculated to be 3.0%.

The lithium-rich solution was purified to remove small amounts of residual impurity ions such as nickel, cobalt, and manganese, thereby facilitating the subsequent production of lithium carbonate products.

### Example 14

Spent lithium cobalt oxide and lithium nickel manganese cobalt oxide batteries were crushed and sorted to produce a cathode and anode mixed scrap powder (including the following major components: 4.24% of Li, 12.85% of Ni, 35.6% of Co, 5.71% of Mn, 28.7% of C, 3.0% of Cu, and 0.55% of Al). The cathode and anode mixed scrap powder was mixed with malonic acid. An amount of the malonic acid was 2.0 times a mass of the cathode and anode mixed scrap powder. Water was added at a liquid-to-solid ratio of 3:1, and slurrying was conducted. At 85°C, sulfuric acid was slowly added, and stirring was conducted to allow leaching for 1.5 h. An amount of the sulfuric acid was 0.60 time the mass of the cathode and anode mixed scrap powder. Sodium thiosulfate as a reducing agent was added, and a reaction was conducted for 4.5 h. An amount of the reducing agent was 0.35 time the mass of the cathode and anode mixed scrap powder. A pH at an endpoint of the reaction was controlled at 2.5 to 3.0. Solid-liquid separation was conducted to produce a lithium-rich solution and a nickel-cobalt-manganese carbon residue.

Ion concentrations in the lithium-rich solution were determined to be as follows: Li: 13.91 g/L, Ni: 0.03 g/L, Co: 0.1 g/L, Mn: 0.15 g/L, Cu: 0.3 g/L, and Al: 0.05 g/L. Based on the ion concentrations in the lithium-rich solution, a leaching rate of Li was calculated to be 98.42%, a leaching rate of Co was calculated to be 0.08%, a leaching rate of Ni was calculated to be 0.07%, and a leaching rate of Mn was calculated to be 0.78%.

The lithium-rich solution was purified to remove small amounts of residual impurity ions such as nickel, cobalt, and manganese, thereby facilitating the subsequent production of lithium carbonate products.

### Example 15

Spent lithium manganese oxide and lithium nickel manganese cobalt oxide batteries were crushed and sorted to produce a cathode and anode mixed scrap powder (including the following major components: 3.54% of Li, 9.85% of Ni, 5.6% of Co, 20.71% of Mn, 26.7% of C, 3.5% of Cu, and 1.55% of Al). The cathode and anode mixed scrap powder was mixed with ascorbic acid. An amount of the ascorbic acid was 2.5 times a mass of the cathode and anode mixed scrap powder. Water was added at a liquid-to-solid ratio of 3:1, and slurrying was conducted. At 90°C, hydrochloric acid was slowly added, and stirring was conducted to allow leaching for 3.5 h. An amount of the hydrochloric acid was 0.60 time the mass of the cathode and anode mixed scrap powder. Soluble starch as a reducing agent was added, and a reaction was conducted for 4.5 h. An amount of the reducing agent was 0.35 time the mass of the cathode and anode mixed scrap powder. A pH at an endpoint of the reaction was controlled at 3.5. Solid-liquid separation was conducted to produce a lithium-rich solution and a nickel-cobalt-manganese carbon residue.

Ion concentrations in the lithium-rich solution were determined to be as follows: Li: 11.65 g/L, Ni: 0.01 g/L, Co: 0.01 g/L, Mn: 0.15 g/L, Cu: 0.5 g/L, and Al: 0.08 g/L. Based on the ion concentrations in the lithium-rich solution, a leaching rate of Li was calculated to be 98.70%, a leaching rate of Co was calculated to be 0.05%, a leaching rate of Ni was calculated to be 0.05%, and a leaching rate of Mn was calculated to be 0.26%.

The lithium-rich solution was purified to remove small amounts of residual impurity ions such as nickel, cobalt, and manganese, thereby facilitating the subsequent production of lithium carbonate products.

### Example 16

Spent lithium cobalt oxide, lithium manganese oxide, and lithium nickel manganese cobalt oxide batteries were crushed and sorted to produce a cathode and anode mixed scrap powder (including the following major components: 3.67% of Li, 19.85% of Ni, 12.6% of Co, 15.71% of Mn, 30.7% of C, 2.5% of Cu, and 1.15% of Al). The cathode and anode mixed scrap powder was mixed with a sulfuric acid solution at a liquid-to-solid ratio of 3:1, and slurrying was conducted. At 95°C, tartaric acid as a leaching aid was slowly added, and stirring was conducted to allow leaching for 3.5 h. An amount of the tartaric acid was 1.67 times a mass of the cathode and anode mixed scrap powder. Sodium thiosulfate and soluble starch, as reducing agents, were added, and a reaction was further conducted for 4.5 h. A total amount of the reducing agents was 0.35 time the mass of the cathode and anode mixed scrap powder. A pH at an endpoint of the reaction was controlled at 1.5 to 3.5. Solid-liquid separation was conducted to produce a lithium-rich solution and a nickel-cobalt-manganese carbon residue.

Ion concentrations in the lithium-rich solution were determined to be as follows: Li: 12.00 g/L, Ni: 0.04 g/L, Co: 0.02 g/L, Mn: 0.17 g/L, Cu: 0.35 g/L, and Al: 0.08 g/L. Based on the ion concentrations in the lithium-rich solution, a leaching rate of Li was calculated to be 98.10%, a leaching rate of Co was calculated to be 0.05%, a leaching rate of Ni was calculated to be 0.06%, and a leaching rate of Mn was calculated to be 0.33%.

The lithium-rich solution was purified to remove small amounts of residual impurity ions such as nickel, cobalt, and manganese, thereby facilitating the subsequent production of lithium carbonate products.

The above shows and illustrates the basic principles, main features, and advantages of the present disclosure. It should be understood by those skilled in the art that the present disclosure is not limited by the above examples, and the above examples and the description only illustrate the principle of the present disclosure. Various changes and modifications may be made to the present disclosure without departing from the spirit and scope of the present disclosure, and such changes and modifications all fall within the claimed scope of the present disclosure. The claimed scope of the present disclosure is defined by the appended claims and equivalents thereof.

## Claims

1. A method for one-step efficient separation of lithium from an electrode scrap of a multi-element lithium battery, comprising following steps:
the electrode scrap of the multi-element lithium battery is at least one of a cathode scrap and an anode scrap, and the multi-element lithium battery comprises at least one of nickel, cobalt, and manganese,
S1, one-step lithium separation
adding an inorganic acid, a leaching aid, and a reducing agent to a powder of the electrode scrap of the multi-element lithium battery, and stirring at a specific temperature and allowing a leaching reaction for a specific period of time to produce a leached slurry; and
S2, filtration and washing
filtering and washing the leached slurry to produce a lithium-rich solution with a lithium ion concentration of 10 g/L to 30 g/L and a residue.

2. The method for one-step efficient separation of lithium from the electrode scrap of the multi-element lithium battery according to claim 1, wherein the electrode scrap in the S1 is one or a mixture of two or more of a battery, an electrode scrap produced from crushing and sorting an electrode, and a cathode material production scrap;
the battery is one or more of a lithium nickel manganese cobalt oxide battery, a lithium cobalt oxide battery, a lithium nickel oxide battery, a lithium manganese oxide battery, and a lithium nickel cobalt aluminum oxide battery;
the electrode scrap produced from crushing and sorting the electrode is one or more of an electrode scrap produced from crushing and sorting a lithium nickel manganese cobalt oxide electrode, an electrode scrap produced from crushing and sorting a lithium cobalt oxide electrode, an electrode scrap produced from crushing and sorting a lithium nickel oxide electrode, an electrode scrap produced from crushing and sorting a lithium manganese oxide electrode, and an electrode scrap produced from crushing and sorting a lithium nickel cobalt aluminum oxide electrode; and the electrode scrap produced from crushing and sorting the electrode comprises a cathode scrap produced from crushing and sorting the electrode and an anode scrap produced from crushing and sorting the electrode; and
the cathode material production scrap is one or more of a lithium nickel manganese cobalt oxide cathode material production scrap, a lithium cobalt oxide cathode material production scrap, a lithium nickel oxide cathode material production scrap, a lithium manganese oxide cathode material production scrap, and a lithium nickel cobalt aluminum oxide cathode material production scrap.

3. The method for one-step efficient separation of lithium from the electrode scrap of the multi-element lithium battery according to claim 1, wherein in the S2, the inorganic acid and the leaching aid are added first, and then the reducing agent is added.

4. The method for one-step efficient separation of lithium from the electrode scrap of the multi-element lithium battery according to claim 1 or 3, wherein the inorganic acid in the S2 is one or a mixture of two or more of sulfuric acid, hydrochloric acid, and nitric acid;
the reducing agent in the S2 is one or more of sodium metabisulfite, sodium dithionate, hydrogen peroxide, glucose, soluble starch, ferrous sulfate, sodium sulfite, and sodium thiosulfate; and
the leaching aid in the S2 is one or more of citric acid, malonic acid, acetylacetone, oxalic acid, ascorbic acid, tartaric acid, salicylic acid, and ethylenediaminetetraacetic acid (EDTA).

5. The method for one-step efficient separation of lithium from the electrode scrap of the multi-element lithium battery according to claim 1 or 3, wherein in the S2, a mass ratio of the electrode scrap of the multi-element lithium battery to the inorganic acid is 1:(0.05-0.6).

6. The method for one-step efficient separation of lithium from the electrode scrap of the multi-element lithium battery according to claim 1 or 3, wherein in the S2, a mass ratio of the electrode scrap of the multi-element lithium battery to the reducing agent is 1:(0.1-1.0).

7. The method for one-step efficient separation of lithium from the electrode scrap of the multi-element lithium battery according to claim 1 or 3, wherein in the S2, a mass ratio of the electrode scrap of the multi-element lithium battery to the leaching aid is 1:(0.5-3.0).

8. The method for one-step efficient separation of lithium from the electrode scrap of the multi-element lithium battery according to claim 1, wherein in the S2, the leaching reaction is conducted with a liquid-to-solid ratio of (2-6):1.

9. The method for one-step efficient separation of lithium from the electrode scrap of the multi-element lithium battery according to claim 1, wherein in the S2, the leaching reaction is conducted for 1 h to 8 h at 40°C to 100°C, and a pH at an endpoint of the leaching reaction is 1.5 to 4.0.
